# EUROPÄISCHE PATENTSCHRIFT

(11) **EP 2 639 032 B1**
(45) Veröffentlichungstag und Bekanntmachung des Hinweises auf die Patenterteilung: **24.09.2014**
(21) Anmeldenummer: 12159176.2
(22) Anmeldetag: 13.03.2012
(51) Int. Cl.: B29C 37/00, B29C 47/00, B29C 65/00, B32B 17/10, C03C 17/22, C03C 17/245, C03C 17/32, C03C 17/34, C03C 17/36, B60J 1/00, B60R 1/04

(54) **Verfahren zum Bekleben einer beschichteten laminierten Verbundscheibe**
Method for bonding coated laminated compound glazing
Procédé de collage d'une plaque composite laminée revêtue

(43) Veröffentlichungstag der Anmeldung: 18.09.2013
(73) Patentinhaber: Saint-Gobain Glass France, 92400 Courbevoie (FR)
(72) Erfinder: Manz, Florian, 52064 Aachen (DE); Vincent, Julia, 52062 Aachen (DE)
(74) Vertreter: Lendvai, Tomas

(56) Entgegenhaltungen:
- US-A1- 2008 302 462

## Beschreibung

Die Erfindung betrifft ein Verfahren zum direkten Bekleben einer metallisch beschichteten Verbundscheibe.

Sonnendächer in Kraftfahrzeugen erfreuen sich einer zunehmenden Beliebtheit. Die Sonnendächer bestehen häufig aus einer mit einer transparenten Scheibe bedeckten Öffnung des Fahrzeugdaches. Im Hochsommer und bei starker Sonneneinstrahlung kann sich jedoch der Fahrgastraum durch die Dachöffnung sehr stark aufheizen. Zudem kann der Fahrer durch gestreutes Licht während der Fahrt geblendet werden. Auch wirkt sich die Aufheizung des Fahrzeuginnenraums negativ auf die Konzentrations- und Reaktionsfähigkeit des Fahrers aus. Um die Menge an einfallendem Licht zu begrenzen, kann durch spezielle Beschichtungen die Menge und die Art des eingestrahlten Lichtes reguliert und begrenzt werden. In Abhängigkeit von der Zusammensetzung der Beschichtung können verschiedene Wellenlängen elektromagnetischer Strahlung reflektiert oder absorbiert werden. Diese dünnen metall- oder halbleiterbasierten Schichten, sogenannte low-e Schichten, können insbesondere infrarote Strahlung reflektieren oder absorbieren und somit die durchgelassene Energiemenge einer Verglasung reduzieren. Die Schichtdicken der in der Regel aus mehreren elektrisch leitenden und dielektrischen Schichten aufgebauten Beschichtungen bewegen sich häufig im Bereich von 1 nm bis 100 nm. Auch eine Kombination mit farbigen oder teilopaken Druckfarben ist möglich.

Neben den Sonnendächern können auch Windschutzscheiben von Kraftfahrzeugen mit derartigen Beschichtungen versehen werden. Im Gegensatz zu Fahrzeugdächern aus Glas oder Kunststoff sind bei Fahrzeugwindschutzscheiben allerdings im sichtbaren Bereich optisch transparente Beschichtungen notwendig.

Auch im Bauglasbereich sind Scheiben mit einer niedrigen Energiedurchlassrate weit verbreitet. Analog wie oben in Fahrzeugen beschrieben, vermindern sie in der heißen Jahreszeit die Aufheizung der Innenräume und vermindern somit die Energiekosten und die Kohlendioxidemissionen für die Klimatisierung. Gleichzeitig wird im Winter die unerwünschte Abstrahlung der im Gebäude, beispielsweise Wintergärten, vorhandenen Wärme vermindert und die Gebäudeisolierung verbessert.

Die Auftragung von low-e Schichten ist mit einer deutlichen Veränderung der Oberflächeneigenschaften einer glas- oder kunststoffbasierten Scheibe verbunden. Insbesondere die Adhäsions- und Adsorptionsfähigkeit der Scheibe werden im Vergleich zu unbehandelten Scheiben vielfach deutlich beeinflusst. Um eine reproduzierbare und beständige Verklebung von Anbauteilen, beispielsweise Rückspiegelfüßen, zu ermöglichen müssen die low-e Schichten auf der Scheibe im Bereich der Klebung wieder entfernt werden. Dies setzt eine genaue Abmessung der zu entschichteten Bereiche sowie eine schonende Entschichtung voraus. Insbesondere sollte bei der Entschichtung eine Beschädigung der Glasoberfläche oder der benachbarten Beschichtung weitestgehend vermieden werden.

DE 196 04 397 C1 offenbart eine Vorrichtung zum Anextrudieren eines rahmenförmigen Profilstranges an einer Glasscheibe. Die Extrusionsdüse weist einen verlängerten Lippenspalt auf, welcher am Ende durch einen Schieber abgedeckt werden kann.

DE 42 32 554 C1 offenbart ein Verfahren zur Herstellung einer mit einem angeformten Rahmen aus einem thermoplastischen Polymer versehenen Glasscheibe und eine entsprechende Vorrichtung. Die zu bearbeitende Glasscheibe wird dazu vor der eigentlichen Extrusion auf ein beheiztes Formbett abgelegt, welches die Glasscheibenränder überragt. Der erzeugte Profilstrang überragt die Glasscheibe entsprechend dem Formbett.

DE 39 30 414 A1 offenbart eine Glasscheibe mit profiliertem Rahmen, welcher durch Extrusion und Aushärten auf der Scheibe hergestellt wird.

EP 0 678 483 B1 offenbart ein Glassubstrat mit mehreren dünnen Schichten. Diese Schichten umfassen eine Haftschicht auf der Basis von Titanoxid, Zinnoxid oder Tantaloxid, eine Deckschicht und eine Funktionsschicht aus der Gruppe der rostfreien Stähle. Die Dicke der Funktionsschicht beträgt bevorzugt 15 nm bis 45 nm.

US 2002/0192473 A1 offenbart ein transparentes Substrat mit einer mehrlagigen Beschichtung welche Sonneneinstrahlung beeinflussen können. Die Beschichtung umfasst mindestens eine funktionelle Metallschicht aus Niob, Tantal oder Zirkonium und eine Deckschicht aus Aluminiumnitrid, Alumiumoxynitrid oder Siliziumnitrid.

US 2011/0146172 A1 offenbart ein transparentes Substrat mit einer dünnen mehrschichtigen Beschichtung. Die mehrlagige Beschichtung umfasst dabei mindestens zwei absorbierende Funktionsschichten und zwei transparente Schichten aus einem dielektrischen Material. Die Funktionsschichten enthalten bevorzugt ein Metall der Gruppe aus Niob, Tantal und Zirkonium. In einer bevorzugten Ausführungsform sind die Funktionsschichten zumindest teilweise nitriert.

US 2008/302462 A1 offenbart ein Glassubstrat mit Low-E-Schicht, eine acrylbasierte Klebstoffschicht auf der Low-E-Schicht und eine Schutzschicht enthaltend Polyethylenterephthalat auf der Klebstoffschicht, wobei die Schutzschicht und die darunterliegende Klebeschicht leicht entfernbar sind.

Die Aufgabe der Erfindung liegt darin, ein Verfahren zur Befestigung, insbesondere zerstörungsfreien Befestigung, von Anbauteilen an beschichteten Oberflächen von Glasscheiben bereitzustellen.

Die Aufgabe der vorliegenden Erfindung wird erfindungsgemäß durch ein Verfahren gemäß dem unabhängigen Anspruch 1 gelöst.

Das erfindungsgemäße Verfahren zum Bekleben einer beschichteten laminierten Verbundscheibe umfasst einen ersten Schritt, indem eine Verbundscheibe mit mindestens einer Schicht aus einer Funktionsschicht und einer dielektrischen Schicht beschichtet wird. Die Funktionsschicht enthält Niob, Tantal, Molybdän, Zirkonium, Silber Gold, Aluminium, Nickel, Chrom und/oder Kupfer. Die dielektrische Schicht umfasst bevorzugt SiO₂, SnO₂, Bi₂O₃, ZnO, TiO₂, Ta₂O₅, AlN, Si₃N₄ und/oder Gemische davon. Die Reihenfolge der Abscheidung von dielektrischer Schicht und Funktionsschicht auf der Verbundscheibe ist variabel, bevorzugt werden mehrere Funktionsschichten und dielektrische Schichten auf der Verbundscheibe abgeschieden. Optional können weitere Schichten vorhanden sein. Die Schicht wird anschließend mit einer Si₃N₄-Deckschicht in einer Schichtdicke von 20 nm bis 100 nm beschichtet. Es können optional auch Opferschichten aus Titan und Nickelchrom vorhanden sein. Die Opferschichten schließen sich bevorzugt direkt an die Funktionsschichten an.

Ein Primer wird im nächsten Schritt direkt auf der Si₃N₄-Deckschicht aufgetragen. Der Primer enthält bevorzugt Polyisocyanate. Der Primer wird besonders bevorzugt in Form einer Lösung mit einem Filz oder Schwamm auf der zu beklebenden Oberfläche aufgetragen. Die Temperatur beträgt bevorzugt zwischen 10 °C und 40 °C. Die relative Luftfeuchtigkeit beträgt bevorzugt zwischen 20 % und 80 %. Die Ablüftzeit beträgt bevorzugt 30 s bis 3 Tage. Die Größe und Fläche des auf der Si₃N₄-Deckschicht aufgetragenen Primers richtet sich nach der Größe eines später zu befestigenden Anbauteils. Der Primer wird bevorzugt auf einer Fläche von 2 cm² bis 100 cm² aufgetragen. Die Si₃N₄-Deckschicht und die dielektrischen Schichten und die Funktionsschichten werden vor der Auftragung des Primers nicht abgetragen.

In einem abschließenden Schritt wird ein Polymer auf dem Primer aufgetragen. Das Polymer umfasst bevorzugt Dichtelemente wie beispielsweise (extrudierte) Kleberaupen. Häufig eingesetzte Dichtelemente umfassen Polymere wie Polyurethane, Polyolefine, Polysulfide, Polyepoxide und Kautschuk wie Naturkautschuk, Styrol-Butadien-Kautschuk, Butadien-Acrylnitril-Kautschuk, Ethylen-Propylen-Dien-Kautschuk (EPDM), Silikone wie RTV (raumtemperatur-vernetzenden-Silikonkautschuk), HTV-(hochtemperturvernetzenden) Silikonkautschuk, peroxidischvernetzten-Silikonkautschuk und/oder additionsvemetzten-Silikonkautschuk, Polyacrylate und/oder Thermoplastische Elastomere. Diese Dichtelemente dienen dem Wassermanagement und können das Eindringen von Feuchtigkeit verhindern. Ferner wird dadurch die Entwicklung von störenden Fahrgeräuschen wie Pfeifgeräuschen im Fahrgastraum verhindert. Eine weitere wichtige Funktion ist das spannungsfreie, reproduzierbare und stabile Einsetzen der Glaselemente in die dafür vorgesehene Aussparung in der Karosserie des Fahrzeugs. Bevorzugt erfolgt die Herstellung von Dichtungen an Scheiben über eine Extrusion des Polymers und das anschließende Aushärten einer Polymermasse, beispielsweise Polyurethan, zu einem Profilstrang oder über das Abkühlen bei der Benutzung von thermoplastischen Materialien. Die Bildung der Dichtung oder eines Profilstranges erfolgt entweder auf molekularer Ebene, beispielsweise durch Lebende Polymerisation, Kettenpolymerisation, Polykondensation, Polyaddition oder bei Thermoplastischen Elastomeren durch Erwärmen und anschließendes Abkühlen. Zur Verbesserung der elastischen Eigenschaften kann sich noch eine Polymervernetzung, beispielsweise durch Temperaturerhöhung, Luftfeuchtigkeit, Sauerstoffzugabe anschließen. Zum besseren Einbau in die Karosserie und zur Erhöhung der Stabilität und Dichtigkeit umfasst der Profilstrang in vielen Fällen noch Stützlippen (Dichtlippe, Zentrierung). Diese Lippen können über entsprechend geformte Extrusionsdüsen gleichzeitig mit dem eigentlichen Profilstrang hergestellt werden.

Das Polymer umfasst bevorzugt feuchtigkeitsreaktive Schmelzklebstoffe oder heißhärtende Klebstoffe. Das Auftragen des feuchtigkeitsreaktiven Schmelzklebstoffs auf dem Primer erfolgt bevorzugt bei Temperaturen von 80 °C bis 200 °C. Der feuchtigkeitsreaktive Schmelzklebstoff kann über eine entsprechend temperierte Düse aufgebracht werden.

Der feuchtigkeitsreaktive Schmelzklebstoff enthält bevorzugt Polyurethan-Präpolymere, Polyester, Polyolefine und/oder Polyamide sowie Gemische und Copolymere davon.

Alternativ kann ein heißhärtender Klebstoff auf dem Primer aufgetragen werden. Heißhärtende Klebstoffe enthalten bei Raumtemperatur (25 °C) fließfähige organische und/oder anorganische Polymere sowie Copolymere und Gemische davon. Zur Vernetzung der organischen und/oder anorganischen Polymere sind im Vergleich zur Raumtemperatur erhöhte Temperaturen im Bereich von 50 °C bis 300 °C notwendig. Beispiele für geeignete Polymere sind Polyurethane, Silikone, Polyacrylate und Polyepoxide (Epoxidharze) und/oder Gemische davon. Die Zeitdauer für das Aushärten der Klebung hängt vom verwendeten Klebstoff ab. Die Klebung weist bereits nach der Wärmebehandlung eine hohe Verarbeitungsfestigkeit auf, sodass die verbundenen Teile auch vor Erreichen der Endfestigkeit verpackt werden können.

Ein Anbauteil wird bevorzugt auf dem Klebstoff fixiert. Das Anbauteil umfasst bevorzugt Rückspiegel.

In einer bevorzugten Ausführungsform kann die Si₃N₄-Deckschicht vor der Auftragung des Primers mit einer Aktivreinigung behandelt werden. In einer Aktivreinigung werden sowohl die Oberfläche der Si₃N₄-Deckschicht gereinigt als auch die Oberfläche chemisch aktiviert. Die Aktivreinigung kann sowohl in separaten Reinigungs- und Aktivierungsschritten als auch in einem Schritt erfolgen. Im Reinigungsschritt werden anhaftende Verschmutzungen und produktionsbedingte Rückstände entfernt. Im Aktivierungsschritt wird die Oberfläche der Si₃N₄-Deckschicht mit oberflächenaktiven Substanzen modifiziert. Dies kann beispielsweise durch die Addition reaktiver Gruppen erfolgen. Beispiele für reaktive Gruppen für Glassubstrate sind Silane, insbesondere organische Silanderivate. Silane, die über geeignete Abgangsgruppen wie Alkohole verfügen, können eine chemische Bindung mit der freien Si-OH Oberfläche des beschichteten Glassubstrats eingehen. Beispiele für derartige Silane sind Alkyltrimethoxysilane und Alkyltriethoxysilane, beispielsweise Isooctyltrimethoxysilan (C₁₁H₂₆O₃Si /CAS no. [Chemical Abstracts Number] 34396-03-7), Octyltrimethoxysilan (C₁₁H₂₆O₃Si /CAS no. 3069-40-7), Octadecyltrimethoxysilan (C₂₁H₄₆O₃Si / CAS no. 3069-42-9), Octadecyltriethoxysilan (C₂₄H₅₂O₃Si / CAS no. 7399-00-0) und/oder Gemische davon. Die Hydrophobizität einer beschichteten Oberfläche kann auch durch Addition hydrophober oder hydrophiler Gruppen eingestellt und verändert werden. Die Addition von Silanen mit einer langen Alkankette, beispielsweise Octadecyltrimethoxysilan (C₂₁H₄₆O₃Si / CAS no. 3069-42-9), erzeugt eine hydrophobe (wasserabweisende) Oberfläche. Eine hydrophile (wasserliebende) Oberfläche wird durch die Addition polarer Silane, beispielsweise 3-Aminopropyltrimethoxysilan (C₆H₁₇NO₃Si /CAS no. 13822-56-5) oder N-(Hydroxyethyl)-N-methylaminopropyltrimethoxysilan (C₉H₂₃NO₄Si/ CAS no. 330457-46-0) erzeugt. So können die Oberflächeneigenschaften der Si₃N₄-Deckschicht in Abhängigkeit vom später verwendeten Klebstoff gesteuert werden. Je nach später verwendetem Klebstoff können auch Gemische hydrophiler und hydrophober Silane verwendet werden.

Die Aktivreinigung der Si₃N₄-Deckschicht erfolgt bevorzugt in einen Schritt durch Auftragen einer Lösung aus Reinigungsmittel und oberflächenmodifizierender Substanz. Die Lösung kann nach kurzer Einwirkzeit mit einem Filz oder Schwamm abgewischt werden.

Vor dem Auftragen des Primers kann die Si₃N₄-Deckschicht bevorzugt mit einem Plasma aktiviert und gereinigt werden. Unter Plasma wird ein teilweise ionisiertes Gas verstanden. Auf der Oberfläche der Si₃N₄-Deckschicht werden durch das ionisierte Gas Molekülbruchstücke erzeugt, welche eine höhere Adhäsionsfähigkeit der Oberfläche mit dem verwendeten Kleber erzeugen. Glassoberflächen werden besonders bevorzugt mit Atmosphärenplasma und Kunststoffoberflächen mit Niederdruckplasma behandelt.

Die Funktionsschicht weist bevorzugt eine Schichtdicke von 5 nm bis 30 nm auf.

Die Funktionsschicht wird bevorzugt nitriert. Die Nitrierung erhöht wesentlich die chemische Beständigkeit der Funktionsschicht.

Die dielektrische Schicht weist bevorzugt eine Schichtdicke von 5 nm bis 120 nm auf.

Die Gesamtschicht umfasst bevorzugt 3 bis 10 Funktionsschichten und dielektrische Schichten. Durch Veränderung der Dicke und Abfolge der Funktionsschichten lassen sich die Transmissionen verschiedener Wellenlängen elektromagnetischer Strahlung variieren.

Das Polymer enthält bevorzugt Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV (raumtemperturvernetzenden-Silikonkautschuk), HTV-(hochtemperaturvernetzenden) Silikonkautschuk, peroxidischvernetzten-Silikonkautschuk und/oder additionsvemetzten-Silikonkautschuk Polyacrylate, Styrol/Butadien-Blockcopolymere (SBS), Ethylen-Propylen-Dien-Kautschuk (EPDM) und/oder Gemische oder Copolymere, bevorzugt Thermoplastische Elastomere.

Die Verbundscheibe umfasst bevorzugt Glas und/oder Polymere, bevorzugt Flachglas, Floatglas, Quarzglas, Borosilikatglas, Kalk-Natron-Glas, Polybutylenterephthalat, Polyamide, Polycarbonat, Polyurethane, Polybutylen, Polypropylen, Polyethylen, Polyethylenterephthalat, Polyvinylchlorid, Polystyrol, Acrylnitril-Butadien-Styrol, Ethylenvinylacetat, Ethylenvinylalkohol, Polyimide, Polyester, Polyketone, Polyetheretherketone, Polymethylmethacrylat, Polycarbonat und/oder Gemische davon.

Die Verbundscheibe umfasst bevorzugt zwei Scheiben und eine polymere Zwischenschicht, umfassend PVB (Polyvinylbutyral) oder EVA (Poly-Ethylvinylacetat).

Der Klebstoff enthält bevorzugt heiß-, feuchtigkeits- oder UV-härtende Polymere, besonders bevorzugt Polyurethan-Präpolymere, Polyester, Polyolefine, Polyurethane und/oder Polyamide sowie Gemische und/oder Copolymere davon.

Es wird bevorzugt eine Reinigungslösung auf der Si₃N₄-Deckschicht aufgetragen. Die Reinigungslösung enthält bevorzugt Silane, Tenside, Alkohole, Ketone und/oder Gemische davon.

Der Primer enthält bevorzugt Polyisocyanate, reaktive Silane, Methacrylate und/oder Polyurethane.

Das Anbauteil umfasst bevorzugt Rückspiegel, besonders bevorzugt Kraftfahrzeugrückspiegel.

Das Polymer umfasst bevorzugt Dichtungen für Kraftfahrzeugscheiben, besonders bevorzugt extrudierte Kleberaupen und/oder Dichtlippen.

Im Folgenden wird die Erfindung anhand von Zeichnungen näher erläutert. Die Zeichnung ist eine rein schematische Darstellung und nicht maßstabsgetreu. Sie schränkt die Erfindung in keiner Weise ein.

Es zeigen:
Figur 1 einen Querschnitt einer beschichteten Scheibe mit Anbauteil nach dem Stand der Technik,
Figur 2 einen Querschnitt einer nach dem erfindungsgemäßen Verfahren hergestellten Scheibe,
Figur 3 einen Querschnitt einer weiteren nach dem erfindungsgemäßen Verfahren hergestellten Scheibe,
Figur 4 ein Fließschema des erfindungsgemäßen Verfahrens und
Figur 5 ein Fließschema des alternativen erfindungsgemäßen Verfahrens.

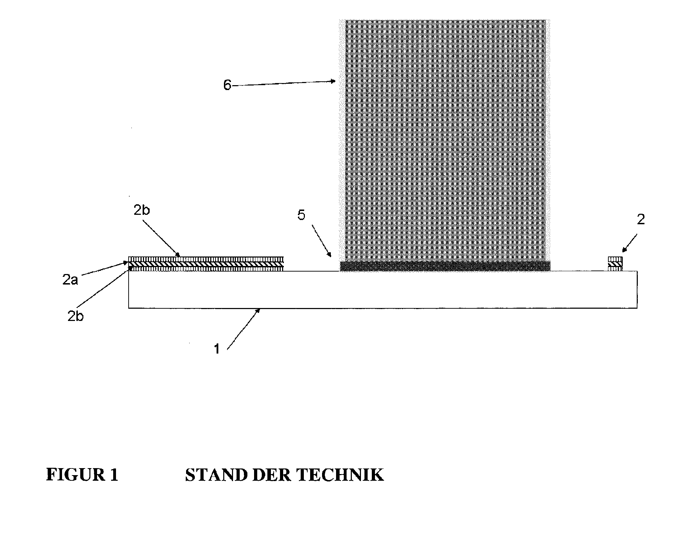

Figur 1 zeigt einen Querschnitt einer beschichteten Verbundscheibe (1) mit einem Anbauteil (6) nach dem Stand der Technik. Auf der Verbundscheibe (1) ist eine Schicht (2) aus dielektrischer Schicht (2b), Funktionsschicht (2a) und dielektrischer Schicht (2b) aufgebracht. Um eine haltbare Klebung zu gewährleisten, ist im Bereich des Klebstoffes (5) die Gesamtschicht entfernt. Dieser beschichtungsfreie Bereich setzt einen zusätzlichen Schritt zur Entfernung der Schicht (2) aus dielektrischer Schicht (2b), Funktionsschicht (2a) und dielektrischer Schicht (2b) voraus. Mithilfe des Klebstoffes (5) ist ein Anbauteil (6), beispielsweise ein Rückspiegel, an der Verbundscheibe (1) fixiert.

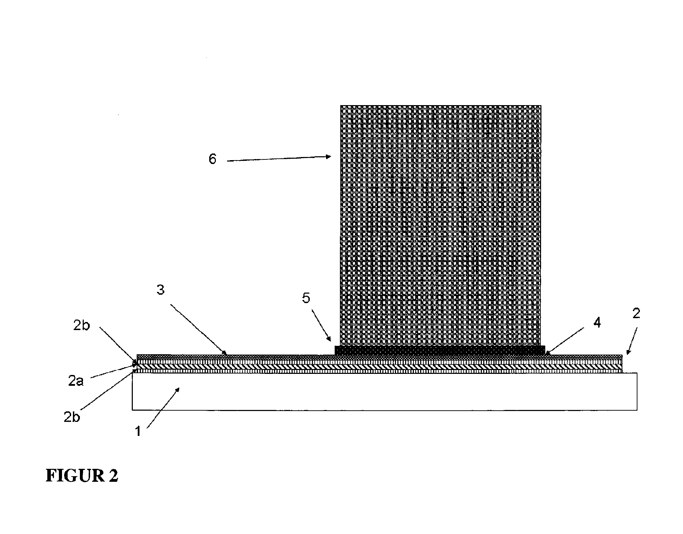

Figur 2 zeigt einen Querschnitt einer nach dem erfindungsgemäßen Verfahren hergestellten Scheibe. Der Grundaufbau aus Verbundscheibe (1), Gesamtschicht (2) aus dielektrischer Schicht (2b), Funktionsschicht (2a) und dielektrischer Schicht (2b) entspricht dem in Figur 1 gezeigten. Auf der oberen dielektrischen Schicht (2b) wird eine Si₃N₄-Deckschicht (3) aufgebracht. Die Si₃N₄-Deckschicht (3) ermöglicht über einen Primer (4) sowie Klebstoff (5) eine direkte und dauerhafte Verbindung des Anbauteils (6) mit der Verbundscheibe (1). Ein zusätzlicher Schritt wie das Abkleben oder das Entfernen der Schicht (2) oder der Si₃N₄-Deckschicht (3) ist nicht notwendig.

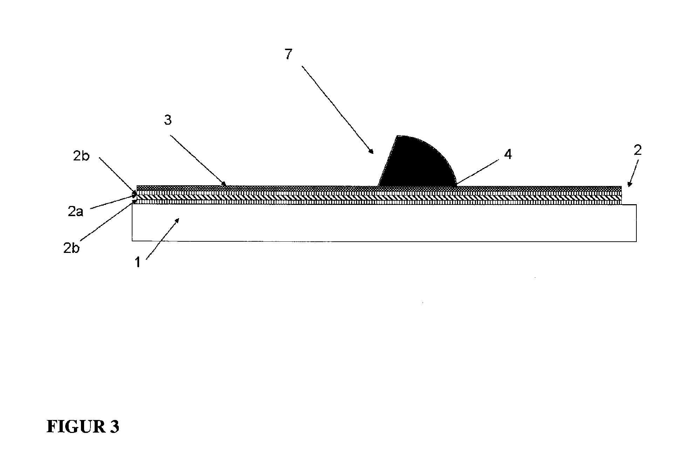

Figur 3 zeigt einen Querschnitt einer weiteren nach dem erfindungsgemäßen Verfahren hergestellten Scheibe. Der Grundaufbau aus Verbundscheibe (1), Schicht (2) aus dielektrischer Schicht (2b), Funktionsschicht (2a) und dielektrischer Schicht (2b) entspricht dem in Figur 1 gezeigten. Auf der oberen dielektrischen Schicht (2b) wird eine Si₃N₄-Deckschicht (3) aufgebracht. Die Si₃N₄-Deckschicht (3) ermöglicht über einen Klebstoff (5) eine direkte und dauerhafte Verbindung eines Polymers (7), bevorzugt einer extrudierten Kleberaupe, mit der beschichteten Scheibe.

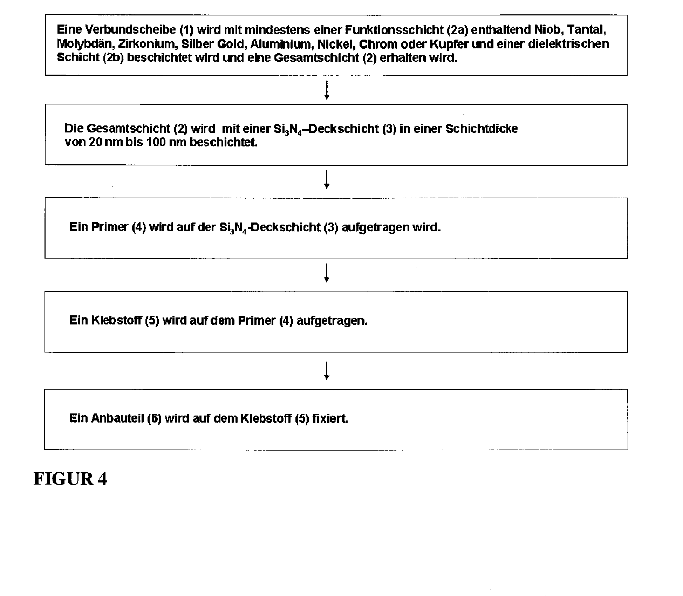

Figur 4 zeigt ein Fließschema des erfindungsgemäßen Verfahrens. In einen ersten Schritt wird eine Verbundscheibe (1) mit mindestens einer Schicht (2) aus einer Funktionsschicht (2a) und einer dielektrischen Schicht (2b) beschichtet. Die Funktionsschicht (2a) enthält bevorzugt Niob, Tantal, Molybdän und/oder Zirkonium. Die dielektrische Schicht (2b) umfasst bevorzugt SiO₂, SnO₂, ZnO, TiO₂, Ta₂O₅ und/oder Gemische davon. Die Reihenfolge der Abscheidung von dielektrischer Schicht (2b) und Funktionsschicht (2a) auf der Verbundscheibe ist variabel, bevorzugt werden mehrere Funktionsschichten (2a) und dielektrische Schichten (2b) auf der Verbundscheibe (1) abgeschieden. Die Abscheidung erfolgt bevorzugt mittels PVD (Physical Vapor Deposition), beispielsweise über Sputtern, bevorzugt Magnetronsputtern. Die Schicht (2) wird anschließend mit einer Si₃N₄-Deckschicht (3) in einer Schichtdicke von 20 nm bis 100 nm beschichtet. Ein Primer (4) wird im nächsten Schritt direkt auf der Si₃N₄-Deckschicht (3) aufgetragen. Der Primer (4) wird besonders bevorzugt in Form einer Lösung mit einem Filz oder Schwamm auf der zu beklebenden Oberfläche aufgetragen. Die Größe und Fläche des auf der Si₃N₄-Deckschicht aufgetragenen Primers (4) richtet sich der Größe eines später zu befestigenden Anbauteils. Die Si₃N₄-Deckschicht (3) und die Schicht (2) werden vor der Auftragung des Primers nicht abgetragen. Dies spart einen zusätzlichen Arbeitsschritt vor der eigentlichen Klebung ein. In einem abschließenden Schritt wird ein Klebstoff (5) auf dem Primer (4) aufgetragen und ein Anbauteil (6) auf dem Klebstoff (5) fixiert.

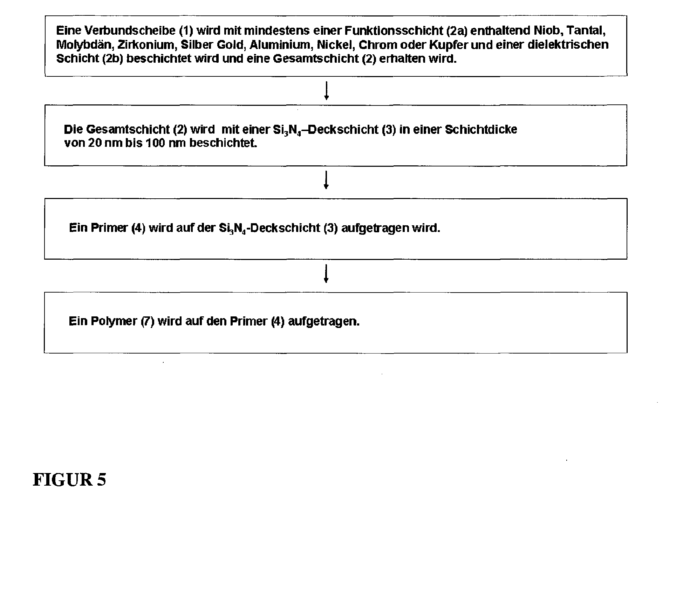

Figur 5 zeigt ein Fließschema des alternativen erfindungsgemäßen Verfahrens. In einen ersten Schritt wird eine Verbundscheibe (1) mit mindestens einer Schicht enthaltend eine Funktionsschicht (2a) und einer dielektrischen Schicht (2b) beschichtet. Die Funktionsschicht enthält bevorzugt Niob, Tantal, Molybdän, Zirkonium. Die Reihenfolge der Abscheidung von dielektrischer Schicht (2b) und Funktionsschicht (2a) auf der Verbundscheibe (1) ist variabel, bevorzugt werden mehrere Funktionsschichten (2a) und dielektrische Schichten (2b) auf der Verbundscheibe (1) abgeschieden. Die Schicht (2) wird anschließend mit einer Si₃N₄-Deckschicht (3) in einer Schichtdicke von 20 nm bis 100 nm beschichtet. Ein Primer (4) wird im nächsten Schritt direkt auf der Si₃N₄-Deckschicht aufgetragen. Der Primer (4) wird in Form einer Lösung mit einem Filz oder Schwamm auf der zu beklebenden Oberfläche aufgetragen. Die Größe und Fläche des auf der Si₃N₄-Deckschicht aufgetragenen Primers (4) richtet sich nach der Größe eines später zu befestigenden Anbauteils. Der Primer (4) wird bevorzugt auf einer Fläche von 0,5 cm bis 4 cm umlaufend vom Rand aufgetragen. Die Si₃N₄-Deckschicht (3) und die Schicht (2) werden vor der Auftragung des Primers (4) nicht abgetragen. In einem abschließenden Schritt wird ein Polymer (7) in Form einer Kleberaupe auf den Primer (4) aufgetragen.

### Bezugszeichenliste

(1) Verbundscheibe
(2) Schicht
(2a) Funktionsschicht
(2b) Dielektrische Schicht
(3) Si₃N₄-Deckschicht als die am weitesten von der Verbundscheibe beanstandete Schicht
(4) Primer
(5) Klebstoff
(6) Anbauteil
(7) Polymer

## Patentansprüche

1. Verfahren zum Anbringen eines polymeren Werkstoffes auf einer beschichteten laminierten Verbundscheibe, wobei
a. eine Schicht (2) enthaltend mindestens eine Funktionsschicht (2a) und mindestens eine dielektrische Schicht (2b) auf eine Verbundscheibe (1) aufgetragen wird, wobei die Funktionsschicht (2a) Niob, Tantal, Molybdän, Zirkonium, Silber Gold, Aluminium, Nickel, Chrom, Kupfer und/oder Gemische davon und die dielektrische Schicht (2b) SiO₂, SnO₂, Bi₂O₃, ZnO, TiO₂, Ta₂O₅, AlN, Si₃N₄ und/oder Gemische davon enthält,
b. eine Si₃N₄-Deckschicht (3) in einer Schichtdicke von 20 nm bis 100 nm auf der Schicht (2) aufgetragen wird,
c. ein Primer (4) auf der Si₃N₄-Deckschicht (3) aufgetragen wird,
d. ein Polymer (7) auf den Primer (4) aufgetragen wird,
e. das Polymer (7) einen Klebstoff (5) umfasst,
f. das Polymer (7) Polyurethane, Polyolefine, Polysulfide, Polyepoxide und Kautschuk wie Naturkautschuk, Nitrilkautschuk (NBR) Styrol-Butadien-Kautschuk, Butadien-Acrylnitril-Kautschuk, Ethylen-Propylen-Dien-Kautschuk, Silikone wie RTV (raumtemperturvemetzenden-Silikonkautschuk), HTV-(hochtemperturvernetzenden) Silikonkautschuk, peroxidischvernetzten-Silikonkautschuk und/oder additionsvernetzten-Silikonkautschuk, Polyacrylate, Styrol/Butadien-Blockcopolymere (SBS), Ethylen-Propylen-Dien-Kautschuk (EPDM) enthält und
g. der Primer (4) Polyisocyanate, reaktive Silane, Methacrylate und/oder Polyurethane enthält.

2. Verfahren nach Anspruch 1, wobei die Funktionsschicht (2a) eine Schichtdicke von 5 nm bis 30 nm aufweist.

3. Verfahren nach Anspruch 1 oder 2, wobei die Funktionsschicht (2a) nitriert wird.

4. Verfahren nach einem der Ansprüche 1 bis 3, wobei die dielektrische Schicht (2b) eine Schichtdicke von 5 nm bis 120 nm aufweist.

5. Verfahren nach einem der Ansprüche 1 bis 4, wobei ein Anbauteil (6) auf dem Klebstoff (5) fixiert wird.

6. Verfahren nach einem der Ansprüche 1 bis 5, wobei die Schicht (2) 3 bis 10 Funktionsschichten (2a) und dielektrische Schichten (2b) umfasst.

7. Verfahren nach einem der Ansprüche 1 bis 6, wobei das Polymer (7) Thermoplastische Elastomere enthält.

8. Verfahren nach einem der Ansprüche 1 bis 7, wobei die Verbundscheibe (1) Glas und/oder Polymere, bevorzugt Flachglas, Floatglas, Quarzglas, Borosilikatglas, Kalk-Natron-Glas, Polybutylenterephthalat, Polyamide, Polycarbonat, Polyurethane, Polybutylen, Polypropylen, Polyethylen, Polyethylenterephthalat, Polyvinylchlorid, Polystyrol, Acrylnitril-Butadien-Styrol, Ethylenvinylacetat, Ethylenvinylalkohol, Polyimide, Polyester, Polyketone, Polyetheretherketone, Polymethylmethacrylat, Polycarbonat und/oder Gemische davon enthält.

9. Verfahren nach einem der Ansprüche 1 bis 8, wobei der Klebstoff (5) heiß-, feuchtigkeits- oder UV-härtende Polymere, bevorzugt Polyurethan-Präpolymere, Polyester, Polyolefine, Polyurethane, Polyepoxide, Phenolharze, Silanmodizifizierte Polymerklebstoffe und/oder Polyamide sowie Gemische und/oder Copolymere davon enthält.

10. Verfahren nach einem der Ansprüche 1 bis 9, wobei die Si₃N₄-Deckschicht (3) mit einer Reinigungslösung behandelt wird.

11. Verfahren nach Anspruch 10, wobei die Reinigungslösung Silane, Tenside, Alkohole, Ketone und/oder Gemische davon enthält.

12. Verfahren nach einem der Ansprüche 1 bis 11, wobei das Anbauteil (6) Rückspiegel umfasst.

13. Verfahren nach einem der Ansprüche 1 bis 12, wobei das Polymer (7) Dichtungen, bevorzugt Kleberaupen und/oder Dichtlippen umfasst.

## Claims

1. Method of applying a polymeric material on a coated laminated composite sheet, wherein
a. a layer (2) containing at least one functional layer (2a) and at least one dielectric layer (2b) is applied on a composite sheet (1), wherein the functional layer (2a) contains niobium, tantalum, molybdenum, zirconium, silver, gold, aluminum, nickel, chromium, copper, and/or mixtures thereof, and the dielectric layer (2b) contains SiO₂, SnO₂, Bi₂O₃, ZnO, TiO₂, Ta₂O₅, AIN, Si₃N₄, and/or mixtures thereof,
b. a Si₃N₄ cover layer (3) is applied in a layer thickness from 20 nm to 100 nm on the layer (2),
c. a primer (4) is applied on the Si₃N₄ cover layer (3),
d. a polymer (7) is applied on the primer (4),
e. the polymer (7) includes an adhesive (5),
f. the polymer (7) contains polyurethanes, polyolefins, polysulfides, polyepoxides, and rubber such as natural rubber, nitrile rubber (NBR), styrene butadiene rubber, butadiene acrylonitrile rubber, ethylene propylene diene rubber, silicones such as RTV (room temperature vulcanizing) silicone rubber, HTV (high temperature vulcanizing) silicone rubber, peroxide vulcanizing silicone rubber, and/or addition vulcanizing silicone rubber, polyacrylates, styrene butadiene block copolymers (SBS), ethylene propylene diene rubber (EPDM), and
g. the primer (4) contains polyisocyanates, reactive silanes, methacrylates, and/or polyurethanes.

2. Method according to claim 1, wherein the functional layer (2a) has a layer thickness from 5 nm to 30 nm.

3. Method according to claim 1 or 2, wherein the functional layer (2a) is nitrated.

4. Method according to one of claims 1 through 3, wherein the dielectric layer (2b) has a layer thickness from 5 nm to 120 nm.

5. Method according to one of claims 1 through 4, wherein an add-on component (6) is fixed on the adhesive (5).

6. Method according to one of claims 1 through 5, wherein the layer (2) comprises 3 to 10 functional layers (2a) and dielectric layers (2b).

7. Method according to one of claims 1 through 6, wherein the polymer (7) contains thermoplastic elastomers.

8. Method according to one of claims 1 through 7, wherein composite sheet (1) contains glass and/or polymers, preferably flat glass, float glass, quartz glass, borosilicate glass, soda lime glass, polybutylene terephthalate, polyamides, polycarbonate, polyurethanes, polybutylene, polypropylene, polyethylene, polyethylene terephthalate, polyvinyl chloride, polystyrene, acrylonitrile butadiene styrene, ethylene vinyl acetate, ethylene vinyl alcohol, polyimides, polyesters, polyketones, polyether ether ketones, polymethyl methacrylate, polycarbonate, and/or mixtures thereof.

9. Method according to one of claims 1 through 8, wherein the adhesive (5) contains hot curing, moisture curing, or UV curing polymers, preferably polyurethane prepolymers, polyesters, polyolefins, polyurethanes, polyepoxides, phenolic resins, silane-modified polymer adhesives, and/or polyamides as well as mixtures and/or copolymers thereof.

10. Method according to one of claims 1 through 9, wherein the Si₃N₄ cover layer (3) is treated with a cleaning solution.

11. Method according to claim 10, wherein the cleaning solution contains silanes, surfactants, alcohols, ketones, and/or mixtures thereof.

12. Method according to one of claims 1 through 11, wherein the add-on component (6) comprises rearview mirrors.

13. Method according to one of claims 1 through 12, wherein the polymer (7) comprises seals, preferably adhesive beads and/or sealing lips.

## Revendications

1. Procédé pour déposer une matière polymère sur une vitre composite stratifiée revêtue, dans lequel
a. une couche (2) contenant au moins une couche fonctionnelle (2a) et au moins une couche diélectrique (2b) est déposée sur une vitre composite (1), la couche fonctionnelle (2a) contenant du niobium, du tantale, du molybdène, du zirconium, de l'argent, de l'or, de l'aluminium, du nickel, du chrome, du cuivre et/ou des mélanges de ceux-ci et la couche diélectrique (2b) contenant SiO₂, SnO₂, Bi₂O₃, ZnO, TiO₂, Ta₂O₅, AlN ou Si₃N₄ et/ou des mélanges de ceux-ci ;
b. une couche de recouvrement (3) en Si₃N₄ est déposée sur la couche (2) sous une épaisseur de couche de 20 nm à 100 nm ;
c. un primaire (4) est déposé sur la couche de recouvrement (3) en Si₃N₄;
d. un polymère (7) est déposé sur le primaire (4) ;
e. le polymère (7) comprend une colle (5) ;
f. le polymère (7) contient des polyuréthanes, des polyoléfines, des polysulfures, des polyépoxydes et du caoutchouc comme le caoutchouc naturel, le caoutchouc nitrile (NBR), le caoutchouc styrène butadiène, le caoutchouc butadiène-acrylonitrile, le caoutchouc éthylène-propylène-diène, des silicones comme le RTV (caoutchouc silicone réticulant à la température ambiante), le caoutchouc silicone HTV (réticulant à haute température) et/ou des caoutchoucs silicone réticulant par addition, des polyacrylates, des copolymères à blocs styrène/butadiène (SBS), du caoutchouc éthylène-propylène-diène (EPDM) ; et
g. le primaire (4) contient des polyisocyanates, des silanes réactifs, des méthacrylates, et/ou des polyuréthanes.

2. Procédé selon la revendication 1, dans lequel la couche fonctionnelle (2a) présente une épaisseur de couche de 5 nm à 30 nm.

3. Procédé selon l'une des revendications 1 ou 2, dans lequel la couche fonctionnelle (2 a) est nitrée.

4. Procédé selon l'une des revendications 1 à 3, dans lequel la couche diélectrique (2b) présente une épaisseur de couche de 5 nm à 120 nm.

5. Procédé selon l'une des revendications 1 à 4, dans lequel un élément à monter (6) est fixé sur la colle (5).

6. Procédé selon l'une des revendications 1 à 5, dans lequel la couche (2) comprend 3 à 10 couches fonctionnelles (2a) et couches diélectriques (2b).

7. Procédé selon l'une des revendications 1 à 6, dans lequel le polymère (7) contient des élastomères thermoplastiques.

8. Procédé selon l'une des revendications 1 à 7, dans lequel la vitre composite (1) comprend du verre et/ou des polymères, de préférence, du verre plat, du verre flotté, du verre de quartz, du verre au borosilicate, du verre sodocalcique, du poly(téréphtalate de butylène), des polyamides, du polycarbonate, des polyuréthanes, du polybutylène, du polypropylène, du polyéthylène, du poly(téréphtalate d'éthylène), du poly(chlorure de vinyle), du polystyrène, de l'acrylonitrile-butadiène-styrène, de l'éthylène-acétate de vinyle, de l'éthylène-alcool vinylique, des polyimides, des polyesters, des polycétones, des polyétheréthercétones, du poly(méthacrylate de méthyle), du polycarbonate et/ou des mélanges de ceux-ci.

9. Procédé selon l'une des revendications 1 à 8, dans lequel la colle (5) contient des polymères durcissant à chaud, à l'humidité ou aux UV, de préférence des prépolymères de polyuréthane, des polyesters, des polyoléfines, des polyuréthanes, des polyépoxydes, des résines phénoliques, des colles polymères modifiées par silane et/ou des polyamides ainsi que des mélanges et/ou copolymères de ceux-ci.

10. Procédé selon l'une des revendications 1 à 9, dans lequel la couche de recouvrement en Si₃N₄ (3) est traitée par une solution de nettoyage.

11. Procédé selon la revendication 10, dans lequel la solution de nettoyage contient des silanes, des tensio-actifs, des alcools, des cétones et/ou des mélanges de ceux-ci.

12. Procédé selon l'une des revendications 1 à 11, dans lequel l'élément à monter (6) comprend un rétroviseur.

13. Procédé selon l'une des revendications 1 à 12, dans lequel le polymère (7) comprend des garnitures d'étanchéité, de préférence des cordons de colle ou des lèvres d'étanchéité.
